# EUROPÄISCHE PATENTANMELDUNG

(11) **EP 4 212 827 A1**
(43) Veröffentlichungstag der Anmeldung: **19.07.2023**
(21) Anmeldenummer: 22212598.1
(22) Anmeldetag: 09.12.2022
(51) Int. Cl.: G01D 4/00

(54) **SYSTEM ZUR ERFASSUNG VON VERBRAUCHSDATEN EINER GEBÄUDETECHNISCHEN EINRICHTUNG ZUR ERMITTLUNG EINER CO2-BILANZ**

(30) Priorität: 13.01.2022 DE 102022100710
(71) Anmelder: Clever Home Labs GmbH, 22045 Hamburg (DE)
(72) Erfinder: Fricke, Matthias, 22045 Hamburg (DE)
(74) Vertreter: RGTH

(57) **Zusammenfassung**

Um ein System zur Erfassung von Verbrauchsdaten einer gebäudetechnischen Einrichtung, wobei das System eine Zentraleinheit und mindestens eine erste Sensoreinheit zur Erfassung mindestens eines Teils der Verbrauchsdaten aufweist, wobei die mindestens eine erste Sensoreinheit datentechnisch zur Übertragung der ermittelten Verbrauchsdaten an die Zentraleinheit mit dieser verbunden ist, derart zu verbessern, dass für einen Verbraucher transparent der CO2-fußabdruck so dargestellt werden kann, um eine gezielte Reduzierung zu ermöglichen, wird vorgeschlagen, dass das System zur Ermittlung einer CO2-Bilanz der gebäudetechnischen Einrichtung basierend auf den an die Zentraleinheit übertragenen Verbrauchsdaten ausgebildet ist.

## Beschreibung

Die Erfindung betrifft ein System zur Erfassung von Verbrauchsdaten einer gebäudetechnischen Einrichtung, wobei das System eine Zentraleinheit und mindestens eine erste Sensoreinheit zur Erfassung mindestens eines Teils der Verbrauchsdaten aufweist. Die mindestens eine erste Sensoreinheit ist datentechnisch zur Übertragung der ermittelten Verbrauchsdaten an die Zentraleinheit mit dieser verbunden.

### Stand der Technik

Die beiden Druckschriften WO 2011/015490 A2 und EP 2 702 668 B1 beschreiben jeweils ein Verfahren und eine Vorrichtung für ein Energiemanagementsystem.

In der DE 10 2010 025 095 A1 wird eine Vorrichtung und ein Verfahren zur Verbrauchsüberwachung, insbesondere des Verbrauches von Ressourcen wie beispielsweise Strom, Wasser, Erdgas oder Fernwärme angegeben.

Die DE 10 2009 031 196 A1 stellt eine Anordnung zur Erfassung und Darstellung von Verbrauchsdaten eines Mediums mit wenigstens einem Sensor und einer Zentraleinheit vor.

### Darstellung der Erfindung: Aufgabe, Lösung, Vorteile

Aufgabe der vorliegenden Erfindung ist es, ein System zur Erfassung von Verbrauchsdaten einer gebäudetechnischen Einrichtung, wobei das System eine Zentraleinheit und mindestens eine erste Sensoreinheit zur Erfassung mindestens eines Teils der Verbrauchsdaten aufweist, wobei die mindestens eine erste Sensoreinheit datentechnisch zur Übertragung der ermittelten Verbrauchsdaten an die Zentraleinheit mit dieser verbunden ist, derart auszugestalten, dass durch Transparenz eine gezielte Reduzierung des CO2-Fußabdrucks möglich ist.

Erfindungsgemäß wird hierfür ein System zur Erfassung von Verbrauchsdaten einer gebäudetechnischen Einrichtung vorgeschlagen, wobei das System eine Zentraleinheit und mindestens eine erste Sensoreinheit zur Erfassung mindestens eines Teils der Verbrauchsdaten aufweist. Die mindestens eine erste Sensoreinheit ist dabei datentechnisch zur Übertragung der ermittelten Verbrauchsdaten an die Zentraleinheit mit dieser verbunden.

Das System ist erfindungsgemäß zur Ermittlung einer CO2-Bilanz der gebäudetechnischen Einrichtung basierend auf den an die Zentraleinheit übertragenen Verbrauchsdaten ausgebildet.

Unter einer gebäudetechnischen Einrichtung kann zum Beispiel ein Haus, eine Wohnung, eine Gewerbeeinheit oder eine anderweitige Einrichtung verstanden werden. Die Sensoreinheit kann für unterschiedliche Verbrauchsquellen beziehungsweise Ressourcen ausgelegt sein. Beispielsweise könnte die Sensoreinheit zur Erfassung des Stromverbrauchs, des Wasserverbrauchs, der Gasmenge, der Ölmenge und so weiter ausgebildet sein. Je nach Anwendungsfall kann die Sensoreinheit regelmäßig oder kontinuierlich Daten erfassen beziehungsweise messen.

Die Sensoreinheit weist zumindest einen Sensor zur Erfassung der Daten und einen Sender zur Übermittlung der Daten an die Zentraleinheit auf. Hierfür kann die Sensoreinheit fester Bestandteil eines Gerätes, zum Beispiel eines Stromzählers oder auch eines einzelnen Verbrauchers sein. Alternativerweise könnte die Sensoreinheit ein separates Modul sein, welches mit einem Gerät, zum Beispiel einem Stromzähler, einem Wasserzähler, einem Gasmengenzähler, und so weiter datentechnisch verbunden ist beziehungsweise verbunden werden kann.

Die Zentraleinheit ist zum Empfang der von der mindestens einen Sensoreinheit übertragenen Daten ausgebildet und weist hierfür zumindest einen Empfänger und zur Weiterverarbeitung der Daten eine Recheneinheit auf.

Unter einer CO2-Bilanz ist ein sogenannter CO2-Fußabdruck zu verstehen. Hierfür werden die Verbrauchsdaten analysiert und daraus die CO2-Bilanz ermittelt. Vorzugsweise wird die CO2-Bilanz aus den von der mindestens einen ersten Sensoreinheit an die Zentraleinheit übertragenen Verbrauchsdaten in der Zentraleinheit analysiert und ermittelt. Alternativerweise oder zusätzlich kann die CO2-Bilanz, oder auch Teile davon, in der mindestens einen ersten Sensoreinheit ermittelt werden.

Mit dem erfindungsgemäßen System können individuelle Verbräuche analysiert und es kann die darauf basierende CO2-Bilanz ermittelt werden. Dadurch ist es für den Verbraucher möglich, seine individuelle CO2-Bilanz zu betrachten und gegebenenfalls gezielt Maßnahmen zu ergreifen, um diese zu reduzieren.

Bevorzugterweise ist die erste Sensoreinheit mit einem Stromzähler oder einem Wassermengenzähler oder einem Gasmengenzähler oder einem Ölmengenzähler oder einem Wärmemengenzähler gekoppelt. Die mindestens eine erste Sensoreinheit kann also mit unterschiedlichen Ressourcenzählern gekoppelt sein oder fest in den Ressourcenzählern integriert sein. Alternativerweise kann die Sensoreinheit auch den Zähler aufweisen und somit einen separaten Zähler ersetzen.

Die Sensoreinheit erfasst die Verbrauchswerte der mit der Sensoreinheit gekoppelten Quelle, zum Beispiel den Stromverbrauch. Somit kann die Sensoreinheit zentral den Verbrauch der gesamten gebäudetechnischen Einrichtung oder eines Teils der gebäudetechnischen Einrichtung für eine jeweilige Ressource erfassen. Auch ist es möglich, die Sensoreinheit mit einem einzelnen Verbraucher oder einer Gruppe von Verbrauchern zu koppeln, um deren Verbrauch separat zu erfassen.

Ferner ist es bevorzugterweise vorgesehen, dass das System weitere Sensoreinheiten zur Erfassung weiterer Teile der Verbrauchsdaten der gebäudetechnischen Einrichtung aufweist, wobei die weiteren Sensoreinheiten ebenfalls datentechnisch zur Übertragung der ermittelten Verbrauchsdaten an die Zentraleinheit mit dieser verbunden sind. Somit kann in einfacher Weise ein Multi Metering System, bestehend aus mehreren Sensoreinheiten und einer oder mehreren damit datentechnisch gekoppelten Zentraleinheit beziehungsweise Zentraleinheiten bereitgestellt werden.

In den Haushalten und Gewerbebetrieben werden typischerweise verschiedene Ressourcen verbraucht. Beispielsweise zählen hierzu Gas, Wasser, Strom, Solar, Wärmepumpe, und so weiter. Die Informationen liegen in verschiedenen Formaten, zum Beispiel analog, digital sowie in unterschiedlichen Protokollen vor. Diese Informationen sind für den Nutzer nur schwer zu erfassen und zu überblicken. Dadurch ist das Verständnis auf die Auswirkungen des eigenen Verhaltens nicht immer transparent und nachvollziehbar. Die Verbrauchsdaten unterschiedlicher Ressourcen können mir dem bevorzugten System nunmehr über die einzelnen Sensoreinheiten erfasst und an die Zentraleinheit übermittelt werden. Für den Verbraucher sind die Informationen dann gesammelt von der Zentraleinheit abrufbar, was eine viel größere Transparenz gewährleistet.

Vorzugsweise wird die CO2-Bilanz unmittelbar nach Erfassung der Verbrauchsdaten durch die mindestens eine erste Sensoreinheit ermittelt und/oder aktualisiert. Unter "unmittelbar nach" ist im Sinne der Erfindung zu verstehen, dass die CO2-Bilanz innerhalb von Sekunden oder Minuten nach der Erfassung der Verbrauchsdaten ermittelt und/oder aktualisiert wird. Insbesondere ist dabei vorgesehen, dass die CO2-Bilanz kontinuierlich während der Erfassung von Verbrauchsdaten aktualisiert wird, womit dem Verbraucher mehr oder weniger Life-Daten seiner CO2-Bilanz zur Verfügung gestellt werden. Der Nutzer kann dadurch annähernd in Echtzeit seinen CO2-Fußabdruck und insbesondere die Veränderung verfolgen. Das gilt vorzugsweise nicht nur für die CO2-Bilanz. Besonders bevorzugterweise werden dem Nutzer auch alle ermittelten Verbrauchsdaten unmittelbar nach deren Erfassung zur Verfügung gestellt beziehungsweise angezeigt.

Auch ist bevorzugterweise vorgesehen, dass das System dazu ausgebildet ist, in Bezug auf die CO2-Bilanz relevante Aktivitäten zu erfassen. Beispielsweise können bestimmte Ereignisse erfasst werden, die die CO2-Bilanz positiv oder negativ beeinflussen.

Das System ist ferner bevorzugterweise dazu ausgebildet, in Bezug auf die CO2-Bilanz individuelle Grenzwerte zu erfassen. Beim Überschreiten der Grenzwerte kann dann eine Mitteilung erzeugt werden und/oder es können Maßnahmen zur Reduzierung der CO2-Bilanz auf Basis der an die Zentraleinheit übermittelten Verbrauchsdaten generiert werden. Beispielsweise können hierfür persönliche Ziele als Grenzwerte vorgesehen sein. Der Verbraucher wird dann alarmiert, wenn diese Grenzwerte überschritten werden. Ferner kann dadurch in einfacher Weise ein sogenanntes Benchmarking vorgenommen werden und der Verbraucher in Bezug auf dessen CO2-Bilanz eingestuft werden.

Des Weiteren weist das System bevorzugterweise mindestens eine weitere Sensoreinheit zur Erfassung von Ressourcenmengen auf, welche mittels der gebäudetechnischen Einrichtung beziehungsweise mittels einer in oder an der gebäudetechnischen Einrichtung installierten Anlage erzeugt wurden. Dabei ist die mindestens eine weitere Sensoreinheit ebenfalls datentechnisch zur Übermittlung der erzeugten Ressourcenmenge an die Zentraleinheit mit dieser verbunden. Beispielsweise kann hierdurch mittels der mindestens einen weiteren Sensoreinheit die von einer hauseigenen Solaranlage erzeugte Strommenge erfasst werden. In der Zentraleinheit werden somit bevorzugterweise nicht nur Verbrauchswerte zusammengefasst und für die CO2-Bilanz berücksichtigt, sondern es werden auch selbst erzeugte Energiemengen berücksichtigt und mit den Verbrauchswerten gegengerechnet, wodurch die individuelle CO2-Bilanz positiv beeinflusst beziehungsweise verbessert wird.

Bevorzugterweise ist das System zur Durchführung einer Lastganganalyse für eine Geräteerkennung ausgebildet. Die Analyse der Lastgänge kann in Abhängigkeit der an die Zentraleinheit übermittelten Verbrauchdaten in der Zentraleinheit selbst durchgeführt werden oder nach dem Auslesen der Daten aus der Zentraleinheit auf einem separaten Rechner. Durch die Analyse der Lastgänge können typische Gerätetypen beziehungsweise Verbraucher erkannt und identifiziert werden. Hierfür können zum Beispiel die ermittelten Verbrauchsdaten mit abgespeicherten Lastgangkurven verglichen werden.

Zusätzlich oder alternativerweise ist eine Lastganganalyse zur weiteren Verarbeitung und/oder Weiterleitung an Dritte vorgesehen. Beispielsweise können die durch die Lastganganalyse ermittelten Lastgangdaten an Stromanbieter oder andere Organisationen übermittelt werden. Dies ermöglicht zum Beispiel dem Nutzer lastgangabhängige Tarife anzubieten. Ferner könnte auf dieser Basis der Handel von CO2-Zertifikaten ermöglicht werden. Die Lastgangdaten können aber auch zu anderen Zwecken übermittelt werden. Besonders bevorzugterweise werden die Lastgangdaten unmittelbar nach Erfassung der Verbrauchsdaten und/oder unmittelbar nach Ermittlung der CO2-Bilanz weitergeleitet.

Des Weiteren weist das System bevorzugterweise ein KI-Modul (künstliches Intelligenzmodul) mit einem selbstlernenden Algorithmus zur Verbesserung der Analyse auf. Somit kann die Lastganganalyse bevorzugterweise basierend auf einer künstlichen Intelligenz durchgeführt werden. Auch können die ermittelten Verbrauchsdaten dazu verwendet werden, die künstliche Intelligenz des Systems zu verbessern. Die erkannten Lastgängen können dem selbstlernenden Algorithmus zum Anlernen beziehungsweise kontinuierlichen Weiterlernen vorgegeben werden.

Die mindestens eine erste Sensoreinheit ist bevorzugterweise dazu ausgebildet, die erfassten Verbrauchsdaten zur Geräteerkennung zu analysieren. Beispielsweise kann die mindestens eine erste Sensoreinheit zur Voranalyse und/oder vollständigen Geräteerkennung auf dem Sensor beziehungsweise der Sensoreinheit selbst ausgebildet sein. Die Sensoreinheiten analysieren dabei die gemessenen Daten und entscheiden, welche Daten in welcher Form übertragen werden beziehungsweise übertragen werden müssen. Dies kann zum einen Bandbreite sparen, hilft aber auch, die Lebensdauer der Batterien zu erhöhen.

Ferner ist bevorzugterweise vorgesehen, dass die Zentraleinheit die von der mindestens einen ersten Sensoreinheit empfangenen Verbrauchsdaten zur Geräteerkennung analysiert, wobei auf Basis von aufgezeichneten Lastgangkurven für unterschiedliche Geräte und/oder Gerätetypen die Geräteerkennung durchgeführt wird. Dabei kann zusätzlich analysiert werden, ob eventuelle Events ausgelöst werden müssen. Zum Beispiel könnte dies der Fall sein, falls Wasser konstant beziehungsweise länger als vorgesehen läuft, der Stromverbrauch über die letzte Zeit zu hoch war oder eine Veränderung des Lastgangprofils zu den Vortagen erkennbar ist.

Bevorzugterweise weist das System einen Lernsensor zur Aufzeichnung einer Lastgangkurve eines Gerätes auf, wobei die aufgezeichnete Lastgangkurve dem Gerät oder dem Gerätetyp zugeordnet und zur späteren Geräteerkennung in der Zentraleinheit und/oder der mindestens einen ersten Sensoreinheit abgespeichert wird. Hierfür kann der Lernsensor in der Versorgungsleitung des Gerätes, also zum Beispiel zwischen Steckdose und dem Gerät, geschaltet werden. Zur Durchführung einer späteren Lastganganalyse für eine Geräteerkennung können somit gerätetypische Lastgangkurven mittels des Lernsensors aufgezeichnet werden. Dies kann die Geräteerkennung des gesamten Systems erheblich verbessern.

Auch ist bevorzugterweise vorgesehen, dass die Zentraleinheit sowie die mindestens eine Sensoreinheit und vorzugsweise alle weiteren Sensoreinheiten zur drahtlosen Übertragung mittels eines Long Range Home Area Network (LoRa-HAN) ausgebildet sind. Damit kann eine besonders sichere Funkübertragung über größere Distanzen und auch innerhalb eines Gebäudes, zum Beispiel durch mehrere Decken hindurch gewährleistet werden.

Das System ist bevorzugterweise zum Auslesen der an die Zentraleinheit übermittelten Verbrauchsdaten mittels eines externen Gerätes ausgebildet. Beispielsweise können die an die Zentraleinheit übermittelten Verbrauchsdaten über einen separaten Rechner, ein Handgerät, wie beispielsweise ein Smartphone oder ein Tablet, oder ähnliches ausgelesen werden. Hierfür ist bevorzugterweise eine Appunterstützung und/oder ein Web-Dashboard vorgesehen.

### Kurze Beschreibung der Zeichnungen

Die Erfindung wird im Folgenden anhand bevorzugter Ausführungsformen beispielhaft erläutert.

Es zeigen schematisch:
Figur 1: ein System zur Erfassung von Verbrauchsdaten mit einer Zentraleinheit und einer ersten Sensoreinheit, und
Figur 2: ein System zur Erfassung von Verbrauchsdaten mit zwei Zentraleinheiten und einer Vielzahl von Sensoreinheiten, und
Figur 3: ein System zur Erfassung von Verbrauchsdaten mit einer Zentraleinheit, drei Sensoreinheiten und einem Lernsensor.

### Bevorzugte Ausführungsformen der Erfindung

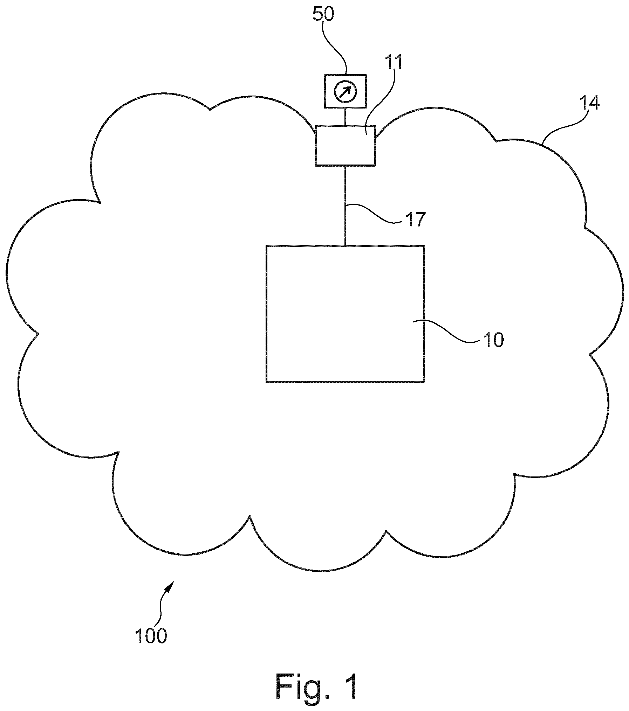

Figur 1 zeigt beispielhaft ein System 100 zur Erfassung von Verbrauchsdaten einer gebäudetechnischen Einrichtung. Das System 100 weist eine Zentraleinheit 10 und eine erste Sensoreinheit 11 auf. Über ein Netzwerk 17 sendet die erste Sensoreinheit 11 erfasste Verbrauchsdaten an die Zentraleinheit 10. Hierfür kann, wie in Figur 1 beispielhaft dargestellt, ein HAN-Netzwerk 14 (Home Area Network) vorgesehen sein.

Die erste Sensoreinheit 11 ist mit einem Zähler 50 gekoppelt. Der Zähler 50 kann beispielsweise ein Stromzähler oder anderweitiger Zähler sein.

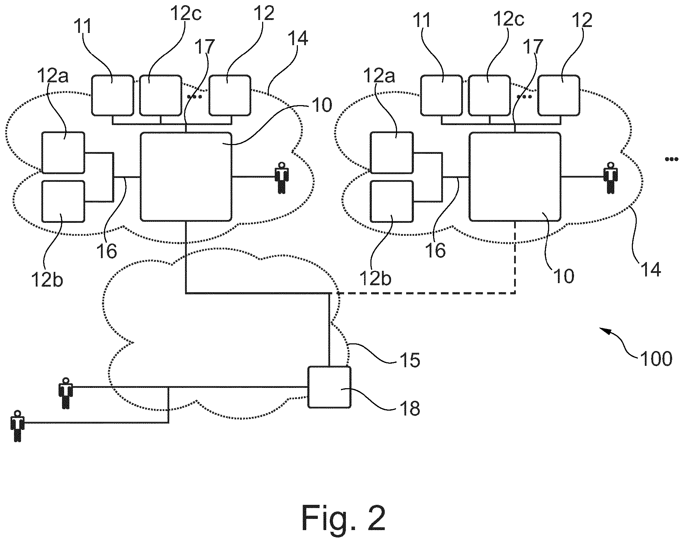

In Figur 2 ist ebenfalls ein System 100 zur Erfassung von Verbrauchsdaten einer gebäudetechnischen Einrichtung beispielhaft dargestellt. Das in Figur 2 dargestellte System 100 zeigt beispielhaft, wie viel komplexer ein solches System 100 aufgebaut sein kann.

Zum Beispiel können zwei oder mehr voneinander getrennte HAN-Netzwerke 14 mit jeweils einer Zentraleinheit 10 vorgesehen sein. Mit jeder der einzelnen Zentraleinheiten 10 sind Sensoreinheiten 11, 12a, 12b, 12c; 12 verbunden.

Die Sensoreinheiten 11, 12a, 12b, 12c; 12 können dabei über eine Direktverbindung 16 mit der Zentraleinheit 10 oder über ein Netzwerk 17 mit der Zentraleinheit 10 verbunden sein.

Das Netzwerk 17 soll beispielhaft ganz allgemein ein Netzwerk darstellen. Hierfür könnte ein kabelgebundenes, aber bevorzugterweise ein drahtloses Netzwerk, zum Beispiel ein HAN-Netzwerk 14 in Form eines LoRa-HAN-Netzwerkes (Long Range Home Area Network) vorgesehen sein.

Das Netzwerk 17 beziehungsweise das HAN-Netzwerk 14 ist ein internes, nicht mit dem Internet verbundenes Netzwerk. Benutzer können über das interne Netzwerk auf die Zentraleinheit 10 und/oder die Sensoreinheiten 11, 12a, 12b, 12c; 12 zugreifen und Daten auslesen. Beispielsweise kann das über eine App oder ein Webinterface geschehen.

Wie in Figur 2 beispielhaft dargestellt, kann eine Zentraleinheit 10 auch über ein externes Netzwerk, beispielsweise das Internet 15, mit einem Server, zum Beispiel Cloudserver, verbunden sein. Dies erhöht die Flexibilität, sodass Benutzer auch aus der Entfernung auf Informationen in der Zentraleinheit 10 zugreifen können. Ferner kann über einen externen Server 18 mehr Rechenleistung zur Verfügung gestellt werden und es können somit CO2-Bilanzen schneller und umfangreicher erstellt werden.

Gemäß der vorliegenden Erfindung ist eine Verbindung zum Internet 15 beziehungsweise ganz allgemein eine externe Verbindung zu einem Server 18 nicht zwingend erforderlich. Die CO2-Bilanz kann in der Zentraleinheit 10 basierend auf den von den Sensoreinheiten 11, 12a, 12b, 12c; 12 ermittelten beziehungsweise übertragenen Verbrauchsdaten berechnet werden.

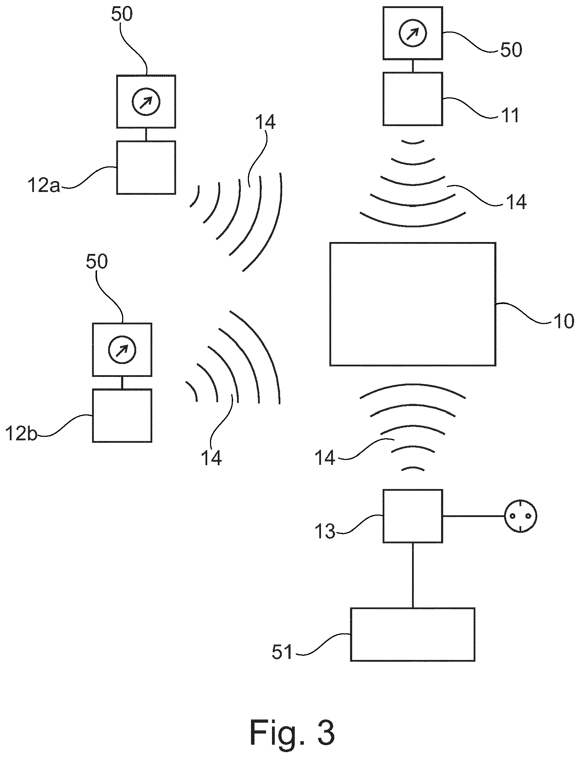

In Figur 3 ist beispielhaft ein System 100 zur Erfassung von Verbrauchsdaten mit einer Zentraleinheit 10 dargestellt. Mit der Zentraleinheit 10 ist ein erste Sensoreinheit 11, eine zweite Sensoreinheit 12a und eine dritte Sensoreinheit 12b über ein HAN-Netzwerk 14 verbunden. Darüber werden die von den Sensoreinheiten 11, 12a, 12b ermittelten Verbrauchsdaten an die Zentraleinheit 10 drahtlos übermittelt.

Jede der drei beispielhaft in Figur 3 dargestellten Sensoreinheiten 11, 12a, 12b ist mit einem Zähler 50, zum Beispiel einem Stromzähler, einem Wasserzähler und einem Wärmemengenzähler gekoppelt. Die einzelnen in Figur 3 beispielhaft dargestellten Sensoreinheiten 11, 12a, 12b erfassen somit Verbrauchsdaten unterschiedlicher Ressourcen.

In der Zentraleinheit 10 werden die von den einzelnen Sensoreinheiten 11, 12a, 12b ermittelten Verbrauchsdaten ausgewertet und für die Erstellung einer gesamten CO2-Bilanz der gebäudetechnischen Einrichtung verwendet.

Ferner ist in Figur 3 beispielhaft ein Lernsensor 13 dargestellt, welcher mit einem Verbraucher 51 elektrisch gekoppelt ist. Beispielsweise kann der Lernsensor 13 zwischen der Steckdose und dem Verbraucher 51 geschaltet sein. Somit kann der Lernsensor 13 die Lastkurve des Verbrauchers 51 über eine vorgegebene Zeitdauer erfassen und aufnehmen. Diese Lastkurve dieses spezifischen Verbrauchers 51 kann dann über das HAN-Netzwerk 14 vom Lernsensor 13 an die Zentraleinheit 10 übermittelt werden. Dies kann zu verschiedenen Zeitpunkten und mit unterschiedlichen Verbrauchern 51 wiederholt werden, sodass für unterschiedliche Verbraucher 51 typische Lastkurven ermittelt und aufgenommen werden können.

Auf dieser Basis kann später die Geräteerkennung durch den Vergleich mit bekannten Lastkurven verbessert werden.

### Bezugszeichenliste

- 100: System zur Erfassung von Verbrauchsdaten

- 10: Zentraleinheit
- 11: Erste Sensoreinheit
- 12: Weitere Sensoreinheiten
- 12a: Zweite Sensoreinheit
- 12b: Dritte Sensoreinheit
- 12c: Vierte Sensoreinheit
- 13: Lernsensor
- 14: HAN Netzwerk
- 15: Internet
- 16: Direktverbindung
- 17: Netzwerk
- 18: Server

- 50: Zähler
- 51: Verbraucher

## Patentansprüche

1. System (100) zur Erfassung von Verbrauchsdaten einer gebäudetechnischen Einrichtung, wobei das System (100) eine Zentraleinheit (10) und mindestens eine erste Sensoreinheit (11) zur Erfassung mindestens eines Teils der Verbrauchsdaten aufweist, wobei die mindestens eine erste Sensoreinheit (11) datentechnisch zur Übertragung der ermittelten Verbrauchsdaten an die Zentraleinheit (10) mit dieser verbunden ist,
**dadurch gekennzeichnet,**
**dass** das System (100) zur Ermittlung einer CO2-Bilanz der gebäudetechnischen Einrichtung basierend auf den an die Zentraleinheit (10) übertragenen Verbrauchsdaten ausgebildet ist.

2. System (100) gemäß Anspruch 1,
**dadurch gekennzeichnet,**
**dass** die erste Sensoreinheit (11) mit einem Stromzähler oder einem Wassermengenzähler, oder einem Gasmengenzähler oder einem Ölmengenzähler oder einem Wärmemengenzähler gekoppelt ist.

3. System (100) gemäß Anspruch 1 oder 2,
**dadurch gekennzeichnet,**
**dass** das System (100) weitere Sensoreinheiten (12; 12a, 12b, 12c) zur Erfassung weiterer Teile der Verbrauchsdaten der gebäudetechnischen Einrichtung aufweist, wobei die weiteren Sensoreinheiten (12: 12a, 12b, 12c) ebenfalls datentechnisch zur Übertragung der ermittelten Verbrauchsdaten an die Zentraleinheit (10) mit dieser verbunden sind.

4. System (100) gemäß einem der vorhergehenden Ansprüche,
**dadurch gekennzeichnet,**
**dass** die CO2-Bilanz unmittelbar nach Erfassung der Verbrauchsdaten durch die mindestens eine erste Sensoreinheit (11) ermittelt und/oder aktualisiert wird.

5. System (100) gemäß einem der vorhergehenden Ansprüche,
**dadurch gekennzeichnet,**
**dass** das System (100) dazu ausgebildet ist, in Bezug auf die CO2-Bilanz relevante Aktivitäten zu erfassen.

6. System (100) gemäß einem der vorhergehenden Ansprüche,
**dadurch gekennzeichnet,**
**dass** das System (100) dazu ausgebildet ist, in Bezug auf die CO2-Bilanz individuelle Grenzwerte zu erfassen, wobei beim Überschreiten der Grenzwerte eine Mitteilung erzeugt wird und/oder Maßnahmen zur Reduzierung der CO2-Bilanz auf Basis der an die Zentraleinheit (10) übermittelten Verbrauchsdaten generiert werden.

7. System (100) gemäß einem der vorhergehenden Ansprüche,
**dadurch gekennzeichnet,**
**dass** das System (100) mindestens eine weitere Sensoreinheit (12; 12a, 12b, 12c) zur Erfassung von Ressourcenmengen, welche mittels der gebäudetechnischen Einrichtung erzeugt wurden, aufweist, wobei die mindestens eine weitere Sensoreinheit (12; 12a, 12b, 12c) ebenfalls datentechnisch zur Übertragung der erzeugten Ressourcenmenge an die Zentraleinheit (10) mit dieser verbunden ist.

8. System (100) gemäß einem der vorhergehenden Ansprüche,
**dadurch gekennzeichnet,**
**dass** das System (100) zur Durchführung einer Lastganganalyse für eine Geräteerkennung und/oder eine Weiterverarbeitung und/oder eine Weiterleitung ausgebildet ist.

9. System (100) gemäß Anspruch 8,
**dadurch gekennzeichnet,**
**dass** das System (100) ein KI-Modul (künstliches Intelligenz Modul) mit einem selbstlernenden Algorithmus zur Verbesserung der Lastganganalyse aufweist.

10. System (100) gemäß einem der Ansprüche 8 oder 9,
**dadurch gekennzeichnet,**
**dass** die mindestens eine erste Sensoreinheit (11) dazu ausgebildet ist, die erfassten Verbrauchsdaten zur Geräteerkennung zu analysieren.

11. System (100) gemäß einem der Ansprüche 8 bis 10,
**dadurch gekennzeichnet,**
**dass** die Zentraleinheit (10) die von der mindestens einen ersten Sensoreinheit (11) empfangenen Verbrauchsdaten zur Geräteerkennung analysiert, wobei auf Basis von aufgezeichneten Lastgangkurven für unterschiedliche Geräte und/oder Gerätetypen die Geräteerkennung durchgeführt wird.

12. System (100) gemäß einem der Ansprüche 8 bis 11,
**dadurch gekennzeichnet,**
**dass** das System (100) einen Lernsensor (13) zur Aufzeichnung einer Lastgangkurve eines Gerätes aufweist, wobei die aufgezeichnete Lastgangkurve dem Gerät oder einem Gerätetyp zugeordnet und zur späteren Geräteerkennung in der Zentraleinheit (10) und/oder der mindestens einen ersten Sensoreinheit (11) abgespeichert wird.

13. System (100) gemäß einem der vorhergehenden Ansprüche,
**dadurch gekennzeichnet,**
**dass** die Zentraleinheit (10) sowie die mindestens eine Sensoreinheit (11) und vorzugsweise alle weiteren Sensoreinheiten (12; 12a, 12b, 12c) zur drahtlosen Datenübertragung mittels eines Long Range Home Area Network (LoRa-HAN) ausgebildet sind.

14. System (100) gemäß einem der vorhergehenden Ansprüche,
**dadurch gekennzeichnet,**
**dass** das System (100) zum Auslesen der an die Zentraleinheit (10) übermittelten Verbrauchsdaten mittels eines externen Geräts ausgebildet ist.
